**Europäisches Patentamt**

**European Patent Office**

(19)

**Office européen des brevets**

(11) Veröffentlichungsnummer: **0 305 712 B1**

(12)

# EUROPÄISCHE PATENTSCHRIFT

(45) Veröffentlichungstag der Patentschrift:
25.09.91 Patentblatt 91/39

(51) Int. Cl.⁵: **B60T 13/14**

(21) Anmeldenummer: **88111466.4**

(22) Anmeldetag: **16.07.88**

(54) **Bremszylinder.**

(30) Priorität: **29.08.87 DE 3728921**

(43) Veröffentlichungstag der Anmeldung:
**08.03.89 Patentblatt 89/10**

(45) Bekanntmachung des Hinweises auf die
Patenterteilung:
**25.09.91 Patentblatt 91/39**

(84) Benannte Vertragsstaaten:
**DE FR IT SE**

(56) Entgegenhaltungen:
EP-A- 0 038 699

(56) Entgegenhaltungen:
DE-A- 2 527 928
DE-A- 3 404 136
DE-B- 2 602 050
GB-A- 2 043 193

(73) Patentinhaber: **ROBERT BOSCH GMBH**
**Postfach 50**
**W-7000 Stuttgart 1 (DE)**

(72) Erfinder: **Kehl, Georg**
**Taläckerstrasse 61**
**W-7000 Stuttgart 40 (DE)**
Erfinder: **Siegel, Heinz, Ing.-grad**
**Hohenloher Strasse 86**
**W-7000 Stuttgart 40 (DE)**

Jouve, 18, rue Saint-Denis, 75001 PARIS

## Beschreibung

Die Erfindung betrifft einen Bremszylinder mit zumindest einer Bremskammer und einem von einer Kolbenstange betätigbarem Bremskraftverstärker gemäß der Gattung des Hauptanspruchs (vgl. z.B. DE-A-3404136).

Bei den heute in Kraftfahrzeugen eingebauten Bremszylindern sind üblicherweise Bremskraftverstärker zwischen das zu betätigende Bremspedal und die entsprechenden Bremskammern eingeschaltet, wobei diese Bremskraftverstärker nach Betätigung des Bremspedales unabhängig von einer aufgebrachten Bremskraft einen Bremsdruck erzeugen. Hierzu wird nach kurzer Betätigung des Bremspedals ein Anschluß eines Druckraumes zu einem Speicher bzw. Vorratsbehälter geöffnet und Bremsflüssigkeit aus dem Speicher oder dem Vorratsbehälter, beispielsweise über eine Pumpe, in den Druckraum gefördert. Durch den sich erweiternden Druckraum wird ein Servokolben od. dgl. unter Druck gesetzt, der diesen Druck wiederum auf beispielsweise einen Kolben in einer Bremskammer überträgt und so den Bremsdruck unterstützt.

Nach Rücknahme des Bremsdruckes muß eine Rückflußleitung für die sich im Druckraum befindliche Bremsflüssigkeit vorgesehen sein, um den Servokolben od. dgl. entlasten zu können. Wesentlich bei derartigen Bremskraftverstärkern ist das Zusammenspiel von öffnen bzw. Schließen des Zuflusses von Bremsflüssigkeit zum Druckraum und dessen Rückflußsteuerung. Der Erfindung liegt die Aufgabe zugrunde, die durch die Vielzahl der mitbewegten Dichtungen bestehende Gefahr von Leckagen zu mindern und zu verhindern, da hierdurch häufiger die Servopumpe Servobremsflüssigkeit aus dem Vorratsbehälter zum Speicher fördern muß, was Energie benötigt und außerdem nicht geräuschlos vonstattengehen kann.

Diese Aufgabe wird durch die Merkmale des Anspruch 1 gelöst.

Die gesamte Bremsventilanordnung ist dabei in einer Stufenbohrung einer Stange angeordnet, welche von einer Hülse umgeben ist und zusammen mit dieser als Ersatz für den bekannten Servokolben zu verstehen ist. Dabei ist der Bremszylinder so ausgelegt, daß einerseits die Hülse in einem entsprechenden Gehäuseabschnitt und andererseits die Stange in der Hülse gleitet.

Einerseits treffen Hülse und Stange in einer Bremskammer auf ein Druckelement, über welches Bremsflüssigkeit zu dem entsprechenden Bremskreis der Bremsanlage gefördert werden kann. Im vorliegenden Ausführungsbeispiel ist dieses Druckelement eine Scheibe. Es kann aber auch ein Kolben od. dgl. sein. Diese Scheibe ist federgelagert, so daß bei Nachlassen des Bremsdruckes Stange und Hülse wieder in ihre Ausgangslage zurückgeführt werden.

Andererseits bilden Hülse und Stange zusammen mit einem Einsatzkörper einen Druckraum für die Servo-Bremsflüssigkeit, wobei der Einsatzkörper festliegt, so daß sich beim Füllen des Druckraumes Hülse und Stange vom Einsatzkörper wegbewegen.

Den Einsatzkörper durchzieht im übrigen die bekannte Kolbenstange, welche über ein entsprechendes Bremspedal unter Bremsdruck gesetzt werden kann. Über diese Kolbenstange, welche auch in die Stufenbohrung in der Stange eingreift, findet die Steuerung der Bremsventilanordnung statt.

Wesentlich ist, daß sowohl die Stange gegenüber der Hülse wie auch die Hülse gegenüber dem Gehäuseabschnitt mit reibungsarmen Dichtungen belegt ist, damit das Gleiten der beiden Elemente so wenig wie möglich behindert wird. Jeweils zwei dieser reibungsarmen Dichtungen schließen zwischen sich eine Einlaßringkammer und eine Ringkammer ein, in welchen die Servo-Bremsflüssigkeit vom Speicher her geführt ist. Insbesondere bei geschlossenem Bremsventil steht diese Servo-Bremsflüssigkeit in den Ringkammern unter einem gewissen Druck, so daß es zu Leckagen über die reibungsarmen Dichtungen kommen kann. Einerseits würden diese Leckagen in den Druckraum abfließen, der in Ruhelage über die Bremsventilanordnung mit der Rückflußleitung zum Vorratsbehälter in Verbindung steht. Andererseits sind zum Ableiten solcher Leckagen besondere Vorsichtsmaßnahmen getroffen worden. Zwischen Hülse und Gehäuseabschnitt folgt auf die entsprechende reibungsarme Dichtung ein weiterer Ringraum, welcher über eine Bohrung mit der Rückflußleitung in Verbindung steht. So werden Leckagen direkt in die Rückflußleitung abgespeist.

Zwischen Hülse und Stange ist dagegen ein eigener Ringraum ausgebildet, der über eine Querbohrung bzw. weitere Bohrungen in Elementen der Bremsventilanordnung mit der Rückflußleitung verbunden ist.

Weiterhin ist es sehr wichtig, daß Bremskammerbereich und Bremskraftverstärkerbereich voneinander abgedichtet sind. Hierzu ist einmal zwischen dem eben genannten Ringraum zum Ableiten der aus Leckagen resultierenden Servo-Bremsflüssigkeit und der Bremskammer ein entsprechender Dichtring vorgesehen. Die Dichtwirkung dieses Dichtringes wird noch dadurch unterstützt, daß die Stange relativ eng anliegend in der Hülse geführt ist.

Der Ringraum, welcher auf die reibungsarme Dichtung zwischen Gehäuseabschnitt und Hülse folgt und aus welchem Leckageflüssigkeit direkt in die Rückflußleitung der Servo-Bremsflüssigkeit eingespeist wird, ist andererseits dieser reibungsarmen Dichtung wiederum durch eine weitere reibungsarme Dichtung abgedichtet. Erfindungsgemäß ist zwischen dieser reibungsarmen Dichtung und der Bremskammer eine Auffangkammer vorgesehen, welche über entsprechende Bohrungen mit der Rückflußleitung für Servo-Bremsflüssigkeit zu deren Vorratsbehälter verbunden ist.

Um jedoch zu gewährleisten, daß so wenig wie möglich Servo-Bremsflüssigkeit in die Auffangkammer gelangt, ist diese zur Bremskammer hin durch eine Lippendichtung abgedichtet. Um jedoch auch die Auffangkammer nochmals zum Servo-Bremsflüssigkeitsbereich hin abzuschotten, ist eine weitere reibungsarme Dichtung vorgesehen. Zwischen diesen beiden reibungsarmen Dichtungen soll ein Stützring angeordnet sein, wobei der ihn aufnehmende Raum über eine Bohrung aus dem Bremszylinder ausmündet.

Durch diese Anordnung von Dichtungen werden im wesentlichen Leckagen zwischen Bremskammer und Bremskraftverstärker vermieden, sollten sie aber auftreten, so findet eine Ableitung der Leckagen statt. Dies hat zur Folge, daß insbesondere die Bremsventilanordnung sehr dicht gehalten werden kann, so daß sich ein häufiges Nachladen des Speichers erübrigt. Hierdurch wird Energie eingespart sowie die zusätzliche Entstehung von Geräuschen vermieden. Insgesamt ist die Anordnung von sehr geringer Baugröße.

Erfindungswesentlich ist auch das Zusammenspiel zwischen Stange und Hülse. Wenn Servo-Bremsflüssigkeit in den Druckraum hinter Stange und Hülse einfließt, so werden diese beide gemeinsam gegen die Bremskammer verschoben. Sollte, aus welchen Gründen auch immer, der Bremskraftverstärker ausfallen, so wird die Stange unabhängig von der Hülse über die Kolbenstange gegen die Bremskammer hin verschoben. In diesem Fall verbleibt die Hülse in ihrer Ausgangslage. Diese Unabhängigkeit gewährleistet ein Druckring, der so angeordnet ist, daß er nur bei Rückführung der Stange in Eingriff mit der Hülse gelangt.

Die Bremsventilanordnung wurde bereits in der DE-A-3715564 (veröffentlicht am 24.11.88) beschrieben. Es handelt sich dabei um zwei Sitzventile, wobei das eine Sitzventil von einem Ventilkegel und einer Ventilbuchse gebildet wird. In den Ventilkegel ist ein Ventilstößel eingesetzt, der wiederum mit einer in die Kolbenstange eingesetzten Buchse das zweite Sitzventil zum Auslaß der Servo-Bremsflüssigkeit bildet. Auf diese Weise ist gewährleistet, daß das eine Ventil schließt, wenn das andere Ventil geöffnet wird.

Die Rückführung der Servo-Bremsflüssigkeit geschieht in dem vorliegenden Ausführungsbeispiel über Axialbohrungen in der Buchse sowie der Kolbenstange und entsprechende Ringräume und Bohrungen. Diese Axialbohrung in der Buchse steht im übrigen mit den oben genannten Axialbohrungen zum Ringraum zwischen der reibungarmen Dichtung und der Dichtung zur Bremskammer hin in Verbindung.

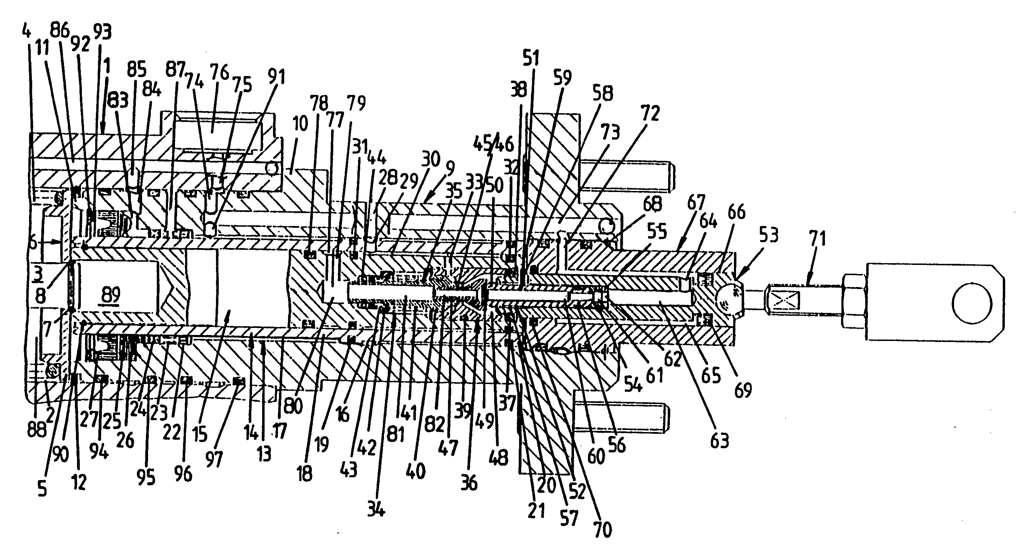

Die Erfindung wird nachfolgend anhand der Zeichnung näher erläutert. Diese zeigt in ihrer einzigen Figur einen Längsschnitt durch einen teilweise dargestellten Hauptbremszylinder, insbesondere im Bereich eines Bremskraftverstärkers.

Ein Gehäuse 1 weist einen Innenraum 2 auf, in welchem zumindest eine Bremskammer für zumindest einen Bremskreis einer Bremsanlage vorgesehen ist. Die Übertragung des Bremsdruckes erfolgt u.a. über eine Druckstange 3 auf einen nicht näher gezeigten Kolben. Ferner stützt sich gegen den ersten Kolben eine Druckfeder 4 ab, welche auf einen flanschartigen Fortsatz 5 einer Scheibe 6 trifft, die die Druckstange 3 umgibt. Über einen Sprengring 7 ist die Scheibe 6 mit der Druckstange 3 gekoppelt, so daß die Scheibe 6 zwar entlang der Druckstange 3 zum Kolben hin gleiten kann, die Druckstange 3 jedoch nicht aus dem mittigen Loch 8 in der Scheibe 6 nehmbar ist.

In dem Innenraum 2 sitzt ein Gehäuseabschnitt 9, welcher sich über einen Ringflansch 10 gegen das Gehäuse 1 abstützt. In Ruhelage liegt die Scheibe 6 mit ihrem flanschartigen Fortsatz 5 einer Ringfläche 11 des Gehäuseabschnitts 9 an, wobei in diesem Bereich ein Sperring 12 in die Wandung des Innenraums 2 eingesetzt ist, der den Bewegungsspielraum der Scheibe 6 begrenzt.

In einer axialen Stufenbohrung 13 in dem Gehäuseabschnitt 9 sitzt eine Hülse 14, welche eine Stange 15 umgibt. Die Hülse 14 bildet zum Gehäuseabschnitt 9 hin eine Einlaßringkammer 16 sowie einen Ringraum 17 aus, wobei zwischen der Einlaßringkammer 16 und dem Ringraum 17 in einem Gleitflansch 18 eine reibungsarme Dichtung 19 sitzt. Ein weiterer Gleitflansch 20 mit einer reibungsarmen Dichtung 21 schließt die Einlaßringkammer 16 ab. Andererseits der Dichtung 19 wird der Ringraum 17 ebenfalls von einer reibungsarmen Dichtung 22 begrenzt, auf welche ein Stützring 23, eine weitere reibungsarme Dichtung 24, ein Stützkörper 25, der sich an der Gehäuseschulter 26 abstützt, sowie eine Lippendichtung 27 folgt.

Die Einlaßringkammer 16 schließt einmal an eine Einlaßbohrung 28 für Servo-Bremsflüssigkeit an, wobei diese Einlaßbohrung 28 nicht gezeigt über eine entsprechende Leitung mit einem Speicher bzw. einer Pumpe für Servo-Bremsflüssigkeit aus einem Vorratsbehälter in Verbindung steht. Von der Einlaßringkammer 16 führt eine Radialbohrung 29 zu einer weiteren Ringkammer 30, welche zwischen der Stange 15 und der Hülse 14 gebildet ist. Auch diese Ringkammer 30 wird beidseits von reibungsarmen Dichtungen 31 und 32 begrenzt.

Von der Ringkammer 30 führt eine weitere Bohrung 33 zum eigentlichen Bremsventil des Bremskraftverstärkers, welches in einer Stufenbohrung 34 der Stange 15 aufgenommen ist. Den innersten Teil dieses Bremsventils bildet ein Ventilkegel 35, der von einer Ventilbuchse 36 in der Stufenbohrung 34 gehalten wird, wobei sich die Ventilbuchse 36 nach einem Ring 37 gegen einen Sprengring 38 abstützt. Zur Stufenbohrung 34 hin ist die Ventilbuchse 36 mit einer O-Ringdichtung 39 belegt.

Der Ventilkegel 35 weist ferner einen Bund 40 auf, an den eine Druckfeder 41 anschlägt, die sich andererseits an einem, den Ventilkegel 35 umgebenden Stützkörper 42 abstützt. Dieser stützkörper 42 drückt wiederum auf eine, in der Stufenbohrung 34 vorgesehene Schulter 43 und sichert eine Lippendichtung 44 in axialer Richtung.

Zum Ventilkegel 35 hin bildet die Ventilbuchse 36 einen schalenförmigen Ventilsitz 45, in welchem in Schließlage des Ventils eine abgerundete Schulter 46 des Ventilkegels 35 sitzt.

Der Ventilsitz 45 wird von einem in den Ventilkegel 35 eingesetzten Ventilstößel 47 durchgriffen. Dieser Ventilstößel 47 erweitert sich in einer Arbeitskammer 48 zu einem zweiten Ventilsitz 49, welcher einen Ventilkopf 50 einer Buchse 51 aufnehmen kann. Diese Buchse 51 ist axial in einer Kopfbohrung 52 einer Kolbenstange 53 eingesetzt und trifft dort auf einen Stützkörper 54, der von Ausgleichsscheiben 55 unterlegt ist. Zur Kopfbohrung 52 hin ist ferner eine Dichtung 56 vorgesehen.

Zwischen dem Außendurchmesser der Buchse 51 und dem Innendurchmesser der Kopfbohrung 52 besteht im Ausgangsbereich zur Arbeitskammer 48 hin eine derartige Differenz, daß ein Ringraum 57 ausgebildet ist, über den Servo-Bremsflüssigkeit aus der Arbeitskammer 48 und eine entsprechende Radialbohrung 58 in Räume 59 hinter der Stange 15 und der Hülse 14 einfließen kann.

Zur Rückführung der Servo-Bremsflüssigkeit aus der Arbeitskammer 48 besitzt die Buchse 51 eine Axialbohrung 60, welche über entsprechende Löcher 61 und 62 in dem Stützkörper 54 und in den Ausgleichsscheiben 55 mit einer Längsbohrung 63 in der Kolbenstange 53 in Verbindung steht. Aus dieser Längsbohrung 63 führt eine Querbohrung 64 zu einer Ringkammer 65, welche durch Ausbildung unterschiedlicher Außen- bzw. Innendurchmesser der Kolbenstange 53 bzw. einer Zentralbohrung 66 eines die Kolbenstange 53 umgebenden Einsatzkörpers 67 gebildet ist. Dieser Einsatzkörper 67 verschließt die axiale Stufenbohrung 13, wobei er von einem Sprengring 68 gehalten wird. Ferner bildet er die Rückwand der Räume 59, in welchen der Servo-Bremsdruck aufgebaut wird.

Die Ringkammer 65 ist einerseits mit einer Lippendichtung 69 und andererseits durch eine Ringdichtung 70 abgedichtet. Im übrigen steht die Kolbenstange 53 über ein entsprechendes Verbindungselement 71 mit einem nicht näher gezeigten Bremspedal in Verbindung.

Von der Ringkammer 65 führt eine Radialbohrung 72 zu einer den Gehäuseabschnitt 9 durchziehenden Längsbohrung 73, welche über entsprechende Bohrungen 74 und 75 mit einer Rückflußkammer 76 für die Servo-Bremsflüssigkeit zum Vorratsbehälter hin in Verbindung steht.

Auf die reibungsarme Dichtung 31 folgt in der Stange 15 ein weiterer Ringraum 77 sowie danach ein Dichtring 78. Vom Ringraum 77 führt eine Querbohrung 79 zu einer Bodenkammer 80 der Stufenbohrung 34, welche über Axialbohrungen 81 im Ventilkegel 35 und 82 im Ventilstößel 47 mit der Axialbohrung 60 in der Buchse 51 in Verbindung steht.

Ferner ist zwischen der reibungsarmen Dichtung 24 und dem stützkörper 25 eine Auffangkammer 83 ausgebildet, welche über Bohrungen 84 im Gehäuseabschnitt 9 und 85 im Gehäuse 1 mit einer Längsbohrung 86 im Gehäuse 1 zur Rückflußleitung von Bremsflüssigkeit aus den Bremskammern in Verbindung steht.

Auch zwischen der reibungsarmen Dichtung 22 und der reibungsarmen Dichtung 24 im Bereich des Stützringes 23 befindet sich eine Abflußbohrung 87, welche, nicht näher gezeigt, nach außen führt. Hierdurch wird der Zwischenraum zwischen den beiden Dichtungen 22 und 24 zur Atmosphäre hin entlastet. Die Lippendichtung 27 wird durch einen Sicherheitsring 92 und eine Scheibe 93 gehalten. Die O-Ringe 94-97 dichten die Brems- und Rückflußkammern zwischen den beiden Gehäusen ab.

Die Wirkungsweise der erfindungsgemäßen Bremsanlage ist folgende :

Eine auf ein Bremspedal einwirkende Bremskraft wird über das Verbindungselement 71 auf die Kolbenstange 53 übertragen. Diese verschiebt sich in dem Einsatzkörper 67 nach links, wobei die Buchse 51 mitgeführt wird und der Ventilkopf 50 auf den Ventilsitz 49 auftrifft. Hierdurch ist die Rückflußmöglichkeit für Servo-Bremsflüssigkeit aus der Arbeitskammer 48 durch die Axialbohrung 60 und die nachfolgenden Bohrungen versperrt.

Im weiteren Verlauf hebt die Schulter 46 vom Ventilsitz 45 ab und gibt die Verbindung zwischen Arbeitskammer 48 und der Bohrung 33 frei, so daß Servo-Bremsflüssigkeit in die Arbeitskammer 48 eintreten kann. Diese fließt durch den Ringraum 57 und die Radialbohrung 58 in die Druckräume 59 hinter der Hülse 14 bzw. der Stange 15, so daß in diesen Druckräumen 59 ein Servo-Bremsdruck aufgebaut wird, welcher die Stange 15 bzw. die Hülse 14 nach links gegen die Scheibe 6 und die Druckfeder 4 verschiebt, wodurch sich in der Bremskammer 88 Druck aufbaut. Dieser Bremsdruck wirkt auch auf die Druckstange 3 für einen zweiten Bremskreis und verschiebt diese ebenfalls nach links. Dabei kann die Druckstange 3 mit ihrem Sprengring 7 in eine Stirnbohrung 89 in der Stange 15 eingreifen.

Läßt die Bremskraft am Pedal nach, so öffnet der Ventilsitz 50/49 während 45/46 schließt. Hierdurch kann Servo-Bremsflüssigkeit aus der Arbeitskammer 48 durch die Axialbohrung 60, die Löcher 61 und 62, die Längsbohrung 63, die Querbohrung 64, die Ringkammer 65, die Radialbohrung 72, die Längsbohrung 73 und die Bohrungen 74 und 75 zur Rückflußkammer 76 gelangen. Die Scheibe 6 wird unter dem Druck der Druckfeder 4 nach rechts geführt und nimmt die Stange 15 mit. Da zwischen Stange 15 und Hülse 14 ein Druckring 90 vorgesehen ist, nimmt die Stange 15 auch die Hülse 14 in ihre Ausgangslage mit.

Fällt die Zuführanlage für Servo-Bremsflüssigkeit aus, so wirkt die Bremskraft über die Kolbenstange 53 auf die Stange 15, so daß nur diese einen Bremsdruck erzeugt. In diesem Fall bleibt die Hülse 14 beim Verschieben der Stange 15 in ihrer Ausgangslage.

Die Dichtungen 19 und 21 sowie 31 und 32 sind besonders reibungsarm ausgebildet, um das Gleiten der Hülse 14 in der Stufenbohrung 13 bzw. der Stange 15 in der Hülse 14 nicht zu behindern. Reibungsarme Dichtungen lassen aber in der Regel bei Bewegung der Körper geringfügige Leckagen zu. Damit im vorliegenden Fall diese Leckagen der Servo-Bremsflüssigkeit nicht etwa zur Bremskammer 88 gelangen, ist einmal nach der Dichtung 31 eine Rückflußmöglichkeit über den Ringraum 77, die Querbohrung 79, die Bodenkammer 80 und die Axialbohrungen 81 und 82 zur Axialbohrung 60 in der Buchse 51 vorgesehen. Sollte deshalb Servo-Bremsflüssigkeit aus der Ringkammer 30 über die Dichtung 31 übertreten, so wird diese über den eben genannten Weg der Rückflußleitung zugeführt.

Ähnliches gilt auch für die Einlaßringkammer 16 zwischen Hülse 14 und Gehäuseabschnitt 9. Fließt dort Servo-Bremsflüssigkeit über die Dichtung 19, so gelangt sie in den Ringraum 17, welcher über eine Bohrung 91 direkt mit der Längsbohrung 73 zur Rückflußkammer 76 in Verbindung steht.

Die Dichtungen 78 und 27 dienen vor allem zur Abdichtung der Bremskammer 88. Hier besteht keine Möglichkeit des Übertritts von Bremsflüssigkeit in den Servo-Bremskreis. Sollte dennoch Bremsflüssigkeit aus der Bremskammer 88 über die Lippendichtung 27 treten, so gelangt diese in die Auffangkammer 83 und von dort über die Bohrungen 84 und 85 zur Längsbohrung 86. Durch die Bohrung 87, die nach außen führt, ist, wie oben erwähnt, der Zwischenraum zwischen den beiden reibungsarmen Dichtungen 22 und 24 entlastet.

**Patentansprüche**

1. Bremszylinder mit zumindest einer Bremskammer (88) und einem mittels eines Bremspedals über eine Kolbenstange (53) betätigbaren Bremskraftverstärker, in welchem über eine Bremsventilanordnung (45/46 beziehungsweise 49/50) ein Druckraum (59) sowohl mit einem Einlaß (28) wie auch mit einem Auslaß (60-65, 72-76) für Servo-Flüssigkeit in Verbindung steht, mit einem ersten verschiebbaren Kolben (15), der als Stange ausgebildet ist und die Bremsventilanordnung aufnimmt, und mit einem zweiten Kolben (14), der den ersten Kolben (15) nach Art einer Hülse gleitbar umgreift und seinerseits in einem Abschnitt (9) eines Zylindergehäuses (1) gleitet und über einen Anschlag (90) mit dem ersten Kolben (15) koppelbar ist, wobei beide Kolben (14, 15) als Servo Kolben mit ihren bremspedalseitigen Stirnseiten dem im Druckraum herrschenden Druck ausgesetzt sind und mit ihren gegenüberliegenden Stirnseiten den Bremsdruck über ein Druckelement (6) in der Bremskammer (88) erzeugen, dadurch gekennzeichnet, daß die bremspedalseitigen Stirnseiten der beiden Kolben (14, 15) einen gemeinsamen Druckraum (59) haben, und daß die Bremsventilanordnung (45/46 beziehungsweise 49/50) als Sitzventilanordnung ausgebildet ist, die in einer im ersten Kolben (15) befindlichen Stufenbohrung (34) angeordnet ist.

2. Bremszylinder nach Anspruch 1, dadurch gekennzeichnet, daß die Stange (15) in der Hülse (14) und/oder die Hülse (14) in dem Gehäuseabschnitt (9) über erste bzw. zweite reibungsarme Dichtungen (19, 21 bzw. 31, 32) geführt ist bzw. sind.

3. Bremszylinder nach Anspruch 2, dadurch gekennzeichnet, daß die ersten reibungsarmen Dichtungen (19, 21) eine Einlaßringkammer (16) und die zweiten reibungsarmen Dichtungen (31, 32) eine erste Ringkammer (30) einschließen.

4. Bremszylinder nach Anspruch 3, dadurch gekennzeichnet, daß auf eine (19) der ersten reibungsarmen Dichtungen (19, 21) ein erster Ringraum (17) folgt, welcher über eine erste Radial-Bohrung (91) mit einer Längsbohrung (73) als Teil der Rückflußleitung der Servo-Bremsflüssigkeit in Verbindung steht.

5. Bremszylinder nach Anspruch 3 oder 4, dadurch gekennzeichnet, daß auf eine (31) der zweiten reibungsarmen Dichtungen (31, 32) ein zweiter Ringraum (77) folgt, der mit der Rückflußleitung für Servo-Bremsflüssigkeit in Verbindung steht.

6. Bremszylinder nach Anspruch 5, dadurch gekennzeichnet, daß der zweite Ringraum (77) durch einen Dichtring (78) von der Bremskammer (88) getrennt ist.

7. Bremszylinder nach einem der Ansprüche 4 bis 6, dadurch gekennzeichnet, daß der erste Ringraum (17) über eine weitere reibungsarme Dichtung (22) von der Bremskammer (88) getrennt ist.

8. Bremszylinder nach Anspruch 7, dadurch gekennzeichnet, daß zwischen Bremskammer (88) und der weiteren reibungsarmen Dichtung (22) eine Auffangkammer (83) vorgesehen ist, welche über entsprechende Radial-Bohrungen (84, 85) sowie eine Längsbohrung (86) mit der Rückflußleitung der Servo-Bremsflüssigkeit verbunden ist.

9. Bremszylinder nach Anspruch 8, dadurch gekennzeichnet, daß die Auffangkammer (83) einerseits durch eine zusätzliche Dichtung (24) und andererseits zur Bremskammer (88) durch eine Lippendichtung (27) abgedichtet ist.

10. Bremszylinder nach Anspruch 8 oder 9, dadurch gekennzeichnet, daß zwischen der zusätzlichen Dichtung (24) und der Lippendichtung (27) stützkörper (23,25) vorgesehen sind, wobei ein zwischen der zusätzlichen Dichtung (24) und der weiteren reibungsarmen Dichtung (22) belegter Raum über eine zweite Radial-Bohrung (87) in den Hauptbremszylinder mündet.

11. Bremszylinder nach wenigstens einem der Ansprüche 1 bis 10, dadurch gekennzeichnet, daß die Stange (15) einen Druckring (90) aufweist, welcher bei Rückführung der Stange (15) die Hülse (14) mitnimmt.

12. Bremszylinder nach wenigstens einem der Ansprüche 1 bis 11, dadurch gekennzeichnet, daß die Sitzventilanordnung einen Ventilkegel (35) aufweist, der in einer Ventilbuchse (36) sitzt und mit dieser zusammen ein erstes Sitzventil (45/46) zum Einlassen der Servo-Bremsflüssigkeit bildet.

13. Bremszylinder nach Anspruch 12, dadurch gekennzeichnet, daß in den Ventilkegel (35) ein Ventilstößel (47) eingesetzt ist, welcher das erste Sitzventil (45/46) durchgreift und zusammen mit dem Ventilkopf (50) einer Buchse (51) ein zweites Sitzventil (49/50) zum Auslaß der Servo-Bremsflüssigkeit bildet.

14. Bremszylinder nach Anspruch 13, dadurch gekennzeichnet, daß die Buchse (51) in der Kolbenstange (53) sitzt und mit dieser einen dritten Ringraum (57) bildet, welcher eine Verbindung zwischen dem Druckraum (59) und einer Arbeitskammer (48) und damit den beiden Sitzventilen (45/46 bzw. 49/50) ist.

15. Bremszylinder nach Anspruch 14, dadurch gekennzeichnet, daß die Rückflußleitung von einer Axialbohrung (60) in der Buchse (51) sowie einer Längsbohrung (63) und einer Querbohrung (64) in der Kolbenstange (53), sowie einer zwischen Kolbenstange (53) und einem Einsatzkörper (67) gebildeten zweiten Ringkammer (65) und daran anschließenden entsprechenden Bohrungen (72, 73, 74, 75) zu einer Rückflußkammer (76) gebildet ist.

16. Bremszylinder nach Anspruch 15, dadurch gekennzeichnet, daß der zweite Ringraum (77) zwischen einer (31) der zweiten reibungsarmen Dichtungen (31, 32) und dem Dichtring (78) über eine Querbohrung (79), eine Bodenkammer (80) sowie Axialbohrungen (81 und 82) im Ventilkegel (35) bzw. Ventilstößel (47) an die Axialbohrung (60) anschließt.

## Claims

1. Brake cylinder with at least one braking chamber (88) and a brake booster which can be actuated by means of a brake pedal via a piston rod (53) and in which a pressure space (59) is connected via a brake-valve arrangement (45/46 and 49/50 respectively) both to an inlet (28) and to an outlet (60-65, 72-76) for servo fluid, with a first displaceable piston (15), which is designed as a rod and accommodates the brake-valve arrangement, and with a second piston (14), which engages slidably around the first piston (15) in the manner of a sleeve and, for its part, slides in a portion (9) of a cylinder housing (1) and can be coupled via a stop (90) to the first piston (15), the two pistons (14, 15), as servo pistons, being exposed with their end faces on the brake-pedal side to the pressure prevailing in the pressure space and producing with their opposite end faces the brake pressure in the braking chamber (88) via a pressure element (6), characterised in that the end faces on the brake-pedal side of the two pistons (14, 15) have a common pressure space (59) and in that the brake-valve arrangement (45/46 and 49/50 respectively) is designed as a seat-valve arrangement which is arranged in a stepped bore (34) situated in the first piston (15).

2. Brake cylinder according to Claim 1, characterised in that the rod (15) is guided in the sleeve (14) and/or the sleeve (14) is guided in the housing portion (9) via first and second low-friction seals respectively (19, 21 and 31, 32 respectively).

3. Brake cylinder according to Claim 2, characterised in that the first low-friction seals (19, 21) enclose an annular inlet chamber (16) and the second low-friction seals (31, 32) enclose a first annular chamber (30).

4. Brake cylinder according to Claim 3, characterised in that one (19) of the first low-friction seals (19, 21) is followed by a first annular space (17), which is connected via a first radial bore (91) to a longitudinal bore (73) as part of the return line for the servo brake fluid.

5. Brake cylinder according to Claim 3 or 4, characterised in that one (31) of the second low-friction seals (31, 32) is followed by a second annular space (77), which is connected to the return line for servo brake fluid.

6. Brake cylinder according to Claim 5, characterised in that the second annular space (77) is separated from the braking chamber (88) by a sealing ring (78).

7. Brake cylinder according to one of Claims 4 to 6, characterised in that the first annular space (17) is separated from the braking chamber (88) via a further low-friction seal (22).

8. Brake cylinder according to Claim 7, characterised in that a collecting chamber (83), which is connected via corresponding radial bores (84, 85) and a longitudinal bore (86) to the return line for the servo brake fluid, is provided between braking chamber (88) and the further low-friction seal (22).

9. Brake cylinder according to Claim 8, characterised in that the collecting chamber (83) is sealed off on one side by an additional seal (24) and on the other side, towards the braking chamber (88), by a lip seal (27).

10. Brake cylinder according to Claim 8 or 9, characterised in that supporting bodies (23, 25) are provided between the additional seal (24) and the lip seal (27), a space situated between the additional seal (24) and the further low-friction seal (22) opening via a second radial bore (87) into the master brake cylinder.

11. Brake cylinder according to at least one of Claims 1 to 10, characterised in that the rod (15) has a thrust ring (90) which takes along the sleeve (14) during the return of the rod (15).

12. Brake cylinder according to at least one of Claims 1 to 11, characterised in that the seat-valve arrangement has a valve cone (35) which is seated in a valve liner (36) and, together with the latter, forms a first seat valve (45/46) for admitting the servo brake fluid.

13. Brake cylinder according to Claim 12, characterised in that inserted into the valve cone (35) is a valve tappet which reaches through the first seat valve (45/46) and, together with the valve head (50) of a liner (51), forms a second seat valve (49/50) for the outflow of the servo brake fluid.

14. Brake cylinder according to Claim 13, characterised in that the liner (51) is seated in the piston rod (53) and, with the latter, forms a third annular space (57) which is a connection between the pressure space (59) and a working chamber (48) and hence the two seat valves (45/46 and 49/50 respectively).

15. Brake cylinder according to Claim 14, characterised in that the return line is formed by an axial bore (60) in the liner (51) and a longitudinal bore (63) and a transverse bore (64) in the piston rod (53) and by a second annular chamber (65) formed between piston rod (53) and an insert (61) and corresponding bores (72, 73, 74, 75) connected to said annular chamber and leading to a return chamber (76).

16. Brake cylinder according to Claim 15, characterised in that the second annular space (77) between one (31) of the second low-friction seals (31, 32) and the sealing ring (78) is connected to the axial bore (60) via a transverse bore (79), a bottom chamber (80) and axial bores (81 and 82) in the valve cone (35) and valve tappet (47) respectively.


## Revendications

1. Cylindre de frein comprenant au moins une chambre de frein (88) et un servo frein actionnable au moyen d'une pédale de frein par l'intermédiaire d'une tige de piston (53), dans lequel par l'intermédiaire d'un dispositif de soupape de frein (45/46 respectivement 49/50), un espace de pression (59) est en communication aussi bien avec une admission (28) qu'avec une évacuation (60-65, 72-76) pour le liquide du servo frein, comprenant un premier piston déplaçable (15) qui est réalisé en forme de tige et reçoit le dispositif de soupape de frein et un deuxième piston (14) qui enveloppe le premier piston (15) susceptible de glisser à la façon d'un manchon et de son côté glisse dans un tronçon 9 d'un carter cylindrique (1) et qui peut être accouplé par une butée (90) avec le premier piston (15), les deux pistons (14, 15) étant exposés, comme pistons, associés par leurs faces frontales du côté de la pédale de frein à la pression régnant dans l'espace de pression et créant avec leurs faces frontales opposées la pression de freinage par un élément de pression (6) dans la chambre de frein (88), caractérisé en ce que les faces frontales du côté pédale de frein des deux pistons (14, 15) ont un espace de pression commun (59), et en ce que le dispositif de soupape de frein (45/46 respectivement 49/50) est réalisé comme dispositif de soupape à siège, qui se trouve placé dans un alésage à étages (34) situé dans un premier piston (15).

2. Cylindre de frein selon la revendication 1, caractérisé en ce que la tige (15) dans le manchon (14) et/ou le manchon (14) dans le tronçon de carter (9) est ou sont guidés par des premières, respectivement des secondes garnitures à faible friction (19, 21) respectivement (31, 32).

3. Cylindre de frein selon la revendication 2, caractérisé en ce que les premières garnitures (19, 21) à faible friction enferment une chambre annulaire d'admission (16) et les secondes garnitures à faible friction (31, 32) une première chambre annulaire (30).

4. Cylindre de frein selon la revendication 3, caractérisé en ce qu'à une (19) des premières garnitures à faible friction (19, 21) fait suite un premier espace annulaire (17) qui se trouve en communication par un premier alésage radial (91) avec un alésage longitudinal (73) comme partie de la conduite de flux de retour du liquide de servo frein.

5. Cylindre de frein selon la revendication 3 ou la revendication 4, caractérisé en ce qu'à une (31) des secondes garnitures (31, 32) à faible friction fait suite un deuxième espace annulaire (77) qui est en communication avec la conduite de flux de retour du liquide de servo frein.

6. Cylindre de frein selon la revendication 5, caractérisé en ce que le deuxième espace annulaire (77) est séparé de la chambre de frein (88) par une bague d'étanchéité (78).

7. Cylindre de frein selon une des revendications 4 à 6, caractérisé en ce que le premier espace annulaire (17) est séparé de la chambre de frein (88) par une autre garniture (22) à faible friction.

8. Cylindre de frein selon la revendication 7, caractérisé en ce qu'entre la chambre de frein (88) et l'autre garniture (22) à faible friction est prévue une chambre de réception (83) qui est en communication par des perçages radiaux correspondants (84, 85) ainsi qu'un alésage longitudinal (86) à la canalisation de retour du liquide de servo frein.

9. Cylindre de frein selon la revendication 8, caractérisé en ce que la chambre de réception (83) est rendue étanche d'un côté par une garniture supplémentaire (24) et de l'autre côté par rapport à la chambre de frein (88) par un joint à lèvres (27).

10. Cylindre de frein selon la revendication 8 ou la revendication 9, caractérisé en ce qu'entre la garniture supplémentaire (24) et le joint à lèvres (27) sont prévus des corps d'appui (23, 25), un espace marqué entre la garniture supplémentaire (24) et l'autre garniture à faible friction (22) débouchant par un deuxième alésage radial (87) dans le cylindre principal de frein.

11. Cylindre de frein selon une au moins des revendications 1 à 10, caractérisé en ce que la tige (15) comporte une bague de serrage (90) qui dans le retour de la tige (15) entraîne le manchon (14).

12. Cylindre de frein selon une au moins des revendications 1 à 12, caractérisé en ce que le dispositif de soupape à siège comporte un cône de soupape (35) qui est situé dans une douille de soupape (36) et forme avec celle-ci une première soupape à siège (45/46) pour l'admission du liquide de servo frein.

13. Cylindre de frein selon la revendication 12, caractérisé en ce que dans le cône de soupape (35) est inséré un poussoir de soupape (47) qui traverse le premier siège de soupape (45/46) et ensemble avec la tête de soupape (50) d'une douille (51) forme un deuxième siège de soupape (49/50) pour la sortie du liquide de servo frein.

14. Cylindre de frein selon la revendication 13, caractérisé en ce que la douille (51) est placée dans la tige de piston (53) et forme avec celle-ci un troisième espace annulaire (57) qui constitue une liaison entre l'espace de pression (59) et une chambre de travail (48) et donc les deux soupapes à siège (45/46 respectivement 49/50).

15. Cylindre de frein selon la revendication 14, caractérisé en ce que la conduite de retour de fluide est constituée par un alésage axial (60) dans la douille (51) ainsi que par un alésage longitudinal (63) et un alésage transversal (64) dans la tige de piston (53), et ainsi que par une deuxième chambre annulaire (65) formée entre la tige de piston (53) et un corps d'insertion (67) et par des alésages (72, 73, 74, 75) correspondants reliés à la chambre (65) et dirigés vers une chambre de retour de flux (76).

16. Cylindre de frein selon la revendication 15, caractérisé en ce que le deuxième espace annulaire (77) est relié à l'alésage axial (60) entre une (31) des deuxièmes garnitures à faible friction (31, 32) et la bague d'étanchéité (78) par un alésage transversal (79), une chambre de base (80) ainsi que des alésages axiaux (81 et 82) situés dans le cône de soupape (35) ou le poussoir de soupape (47).